# EUROPÄISCHE PATENTANMELDUNG

(11) **EP 0 893 643 A2**
(43) Veröffentlichungstag der Anmeldung: **27.01.1999**
(21) Anmeldenummer: 98890067.6
(22) Anmeldetag: 10.03.1998
(51) Int. Cl.: F16L 47/00

(54) **Kunststoff-Rohrleitungsteil für die Aufnahme eines Thermofühlers**

(30) Priorität: 25.07.1997 AT 1274/97
(71) Anmelder: Harreither Gesellschaft m.b.H, 3334 Gaflenz (AT)
(72) Erfinder: Harreither, Raimund, 3334 Gaflenz (AT)
(74) Vertreter: Kopecky, Helmut, Dipl.-Ing. Kopecky & Schwarz Patentanwälte

(57) **Zusammenfassung**

Um eine absolute Dichtheit bei einem Kunststoff-Rohrleitungsteil (1), in den ein Thermofühler einführbar ist, zu erzielen, sind folgende Merkmale zu verwirklichen:
- eine in den Kunststoff-Rohrleitungsteil (1) zum Teil eingegossene, in das Innere des Kunststoff-Rohrleitungsteils (1) ragende metallische, den Thermofühler aufnehmende Büchse (2), die den Kunststoff-Rohrleitungsteil (1) kreuzend angeordnet ist,
- wobei die Büchse (2) mindestens einen Büchsenkopf (7) mit einem nach außen offenen Ende zum Einführen des Thermofühlers aufweist, welcher Büchsenkopf (7) vom Kunststoff des Kunststoff-Rohrleitungsteiles (1) umgeben ist, und
- der Büchsenkopf (7) außenseitig mit mindestens einer peripher umlaufenden Ringnut (13) versehen ist, die vom Kunststoff des Kunststoff-Rohrleitungsteiles (1) ausgefüllt ist, und
- wobei die Ringnut (13) nicht-parallele Seitenwandflächen (14, 15) aufweist, die in Richtung zur Längsmittelachse (3) der Büchse (2) hin divergieren (Fig. 1).

## Beschreibung

Die Erfindung betrifft einen Kunststoff-Rohrleitungsteil für die Aufnahme eines Thermofühlers.

Um Thermofühler, wie Thermometer mit optischer Anzeige oder Thermofühler, die an Regelkreise angeschlossen sind, an einer Rohrleitung zum Messen der Temperatur der in der Rohrleitung fließenden Flüssigkeit vorzusehen, ist es bekannt, den Thermofühler mit einer Tauchhülse durch eine Bohrung in der Rohrleitung in diese eindringen zu lassen, so daß die Tauchhülse von der Flüssigkeit umspült wird. Schwierigkeiten bereitet hierbei die Dichtung zwischen dem nach außen ragenden Teil des Thermofühlers und der Rohrleitung, da es durch Wärmedehnungen oder mechanische Belastungen leicht zum Austreten einer Flüssigkeit kommen kann.

Die Erfindung stellt sich die Aufgabe, einen Kunststoff-Rohrleitungsteil für die Aufnahme eines Thermofühlers zu schaffen, der absolut dicht ist, d.h. bei dem ein Austreten von Flüssigkeit aus der Rohrleitung mit Sicherheit vermieden wird und dies auch bei höheren Drücken bzw. bei Temperaturschwankungen.

Diese Aufgabe wird durch die Kombination folgender Merkmale gelöst:
- eine in den Kunststoff-Rohrleitungsteil zum Teil eingegossene, in das Innere des Kunststoff-Rohrleitungsteils ragende metallische, den Thermofühler aufnehmende Büchse, die den Kunststoff-Rohrleitungsteil kreuzend angeordnet ist,
- wobei die Büchse mindestens einen Büchsenkopf mit einem nach außen offenen Ende zum Einführen des Thermofühlers aufweist, welcher Büchsenkopf vom Kunststoff des Kunststoff-Rohrleitungsteiles umgeben ist, und
- der Büchsenkopf außenseitig mit mindestens einer peripher umlaufenden Ringnut versehen ist, die vom Kunststoff des Kunststoff-Rohrleitungsteiles ausgefüllt ist, und
- wobei die Ringnut nicht-parallele Seitenwandflächen aufweist, die in Richtung zur Längsmittelachse der Büchse hin divergieren.

Wesentlich ist hierbei die Verbindung zwischen dem Büchsenkopf und dem Kunststoff-Rohrleitungsteil mittels der vom Kunststoff des Kunststoff-Rohrleitungsteils ausgegossenen Ringnuten. Durch die nicht-parallelen und in Richtung zur Längsmittelachse der Büchse hin divergierenden Seitenwandflächen wird ein besonders dichtes Anliegen bzw. Anpressen der in die Ringnuten ragenden Kunststoffmasse an den Seitenwandflächen der Nut erzielt. Allfällige Schrumpfungen der Büchse bzw. des Kunststoffs des Kunststoff-Rohrleitungsteils bewirken eine Erhöhung der Pressung zwischen dem Kunststoff, der in die Ringnuten ragt und den Seitenwandflächen der Ringnut.

Eine bevorzugte Ausführungsform ist dadurch gekennzeichnet, daß die Ringnut einen trapezförmigen Querschnitt aufweist, wobei vorteilhaft eine der Seitenwandflächen senkrecht steht zur Längsmittelachse der Büchse. Die nicht senkrecht zur Längsmittelachse der Büchse stehende Seitenwandfläche schließt mit der Längsmittelachse bevorzugt einen Winkel im Bereich zwischen 85 und 65°, insbesondere einen Winkel von etwa 75° ein.

Gemäß einer weiteren bevorzugten Ausführungsform schließt die Innenseite der Rohrleitungswand an der Büchse dichtend an und ist zwischen der Innenseite der Rohrleitungswand und dem der Aufnahme der Nut dienenden Büchsenkopf ein ringförmiger Ansatz vorgesehen, der einen wesentlich kleineren Außendurchmesser aufweist als der Büchsenkopf, wobei der Ansatz ebenfalls vom Kunststoff des Kunststoff-Rohrleitungsteiles umgeben ist. Dieser ringförmige Ansatz bewirkt folgendes: Zwischen der Büchsenwand und dem Kunststoff des Kunststoff-Rohrleitungsteiles könnte ein Medium eindringen, u.zw. insbesondere, wenn eine gewisse Schrumpfung beim Herstellen des Kunststoff-Rohrleitungsteiles, d.h. beim Eingießen der Büchse stattfindet. In diesem Fall wirkt der ringförmige Ansatz dichtend, u.zw. infolge mehrmaliger Umlenkung der Kunststoff-Büchsen-Grenzfläche. Der Büchsenkopf selbst wird durch diese Ausbildung vom Medium nicht direkt beaufschlagt, d.h. seine senkrecht zur Längsmittelachse der Büchse gerichtete Ringfläche ist zur Gänze vom Kunststoff umgeben. Hierdurch wird eine direkte Druckbeaufschlagung des Büchsenkopfes durch das durch die Rohrleitung fließende Medium vermieden. Es könnte höchstens nur ein ganz geringer Flüssigkeitsdruck auf diese Ringfläche wirken, u.zw. dann, wenn Flüssigkeit nach mehrmaliger Umleitung über den ringförmigen Ansatz doch bis zum Büchsenkopf gelangen sollte.

Eine weitere bevorzugte Ausführungsform ist dadurch gekennzeichnet, daß die Büchse den Kunststoff-Rohrleitungsteil zur Gänze durchsetzt und an beiden Enden mit je einem Büchsenkopfnach Anspruch 1 ausgestattet ist. Die Büchse mit einem durchgehend an beiden Enden der Büchse ins Freie mündenden Hohlraum zu gestalten hat den Sinn, daß der Kunststoff-Rohrleitungsteil auch um 180° gedreht verwendbar ist, was insbesondere bei Heizungsinstallationen in Modulbauweise zweckmäßig ist. Es wird ein Umstecken des Thermometers für Links- oder Rechtsanschluß ermöglicht.

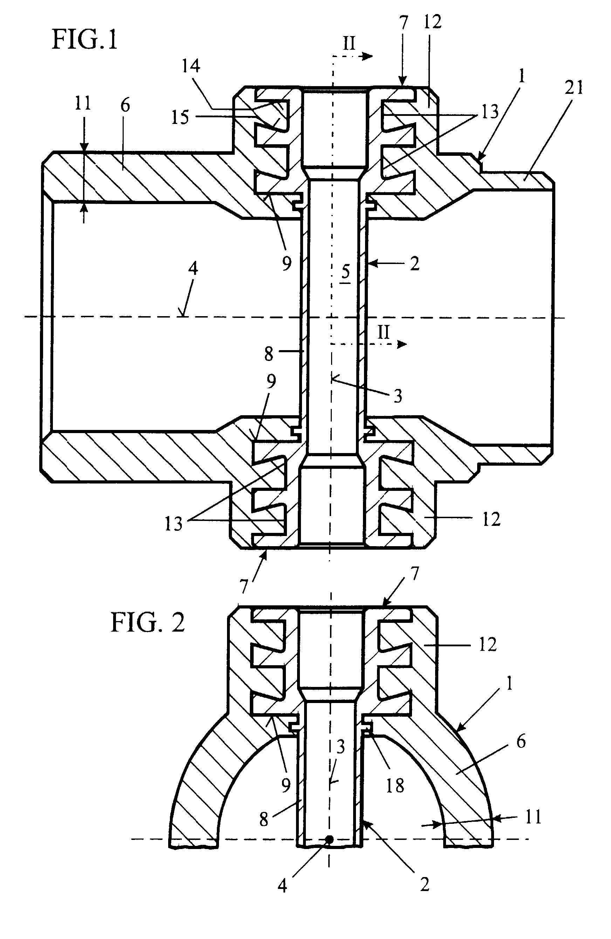

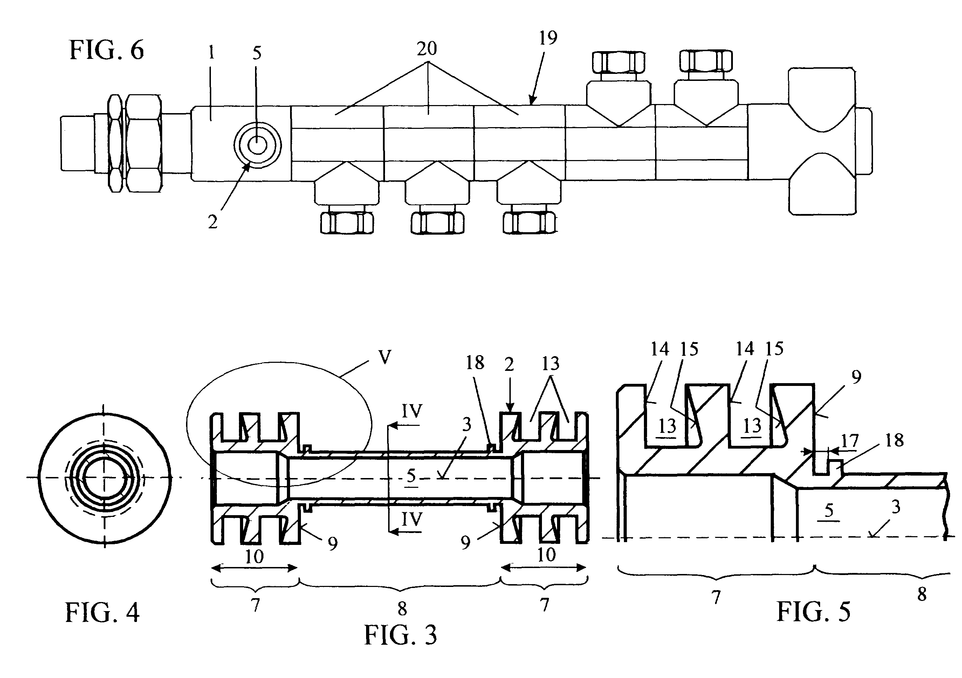

Die Erfindung ist nachfolgend anhand der Zeichnung an einem Ausführungsbeispiel näher erläutert, wobei Fig. 1 einen Längsschnitt durch einen erfindungsgemäßen Kunststoff-Rohrleitungsteil und Fig. 2 einen Querschnitt durch diesen Teil längs der Linie II-II der Fig. 1 zeigen. Fig. 3 zeigt eine erfindungsgemäß ausgestaltete Büchse im Längsschnitt, Fig. 4 einen Schnitt gemäß der Linie IV-IV der Fig. 3 und Fig. 5 ein Detail V der Fig. 3 der Büchse in vergrößertem Maßstab. Fig. 6 veranschaulicht in kleinerem Maßstab ein Einbaubeispiel des erfindungsgemäßen Kunststoff-Rohrleitungsteils, u.zw. in einem Heizkreisverteiler.

An einem Kunststoff-Rohrleitungsteil 1, der vorzugsweise aus Polypropylen gefertigt ist, ist eine den Kunststoff-Rohrleitungsteil zur Gänze in Querrichtung durchsetzende Büchse 2 eingegossen. Die Büchse 2 dient zur Aufnahme eines Thermofühlers. Sie ist vorzugsweise aus einem gut wärmeleitenden Metall, wie beispielsweise Messing, Chrom-Messing oder einer Messinglegierung oder einem anderen gut wärmeleitenden Metall gefertigt. Die Büchse 2 kreuzt den Kunststoff-Rohrleitungsteil 1 vorzugsweise mittig, d.h. die Längsmittelachse 3 der Büchse 2 schneidet die Längsmittelachse 4 des Kunststoff-Rohrleitungsteils 1. Die Büchse 2 weist einen durchgehenden Hohlraum 5 zur Aufnahme eines Thermofühlers auf, so daß dieser sowohl von der einen Seite als auch von der gegenüberliegenden Seite in die Büchse 2 eingeführt werden kann.

Um eine gute Verankerung der Büchse 2 in der Wandung 6 des Kunststoff-Rohrleitungsteils 1 zu erzielen, weist die Büchse 2 an beiden Enden jeweils einen Büchsenkopf 7 auf, welcher Büchsenkopf 7 einen größeren Durchmesser aufweist als der zwischen diesen beiden Büchsenköpfen 7 liegende Büchsenteil 8 und in diesen Büchsenteil 8 mit einer etwa radial zur Längsmittelachse 3 der Büchse 2 gerichteten Ringfläche 9 übergeht. Die Höhe 10 der beiden Büchsenköpfe 7 ist jeweils größer bemessen als die Dicke 11 der Wandung 6 des Kunststoff-Rohrleitungsteils 1. Um die Büchsenköpfe 7 jedoch zur Gänze vom Kunststoff des Kunststoff-Rohrleitungsteils 1 umgeben zu können, ist der Kunststoff-Rohrleitungsteil 1 mit Ansätzen 12 versehen, in die die Büchsenköpfe 7 eingegossen sind.

Jeder der Büchsenköpfe 7 weist außenseitig zwei peripher umlaufende Ringnuten 13 auf, die vom Kunststoff des Kunststoff-Rohrleitungsteils 1 ausgefüllt sind. Jede der Ringnuten weist nicht-parallele Seitenflächen 14, 15 auf, wobei gemäß dem dargestellten Ausführungsbeispiel eine der Seitenflächen jeder Ringnut 13, nämlich die Seitenfläche 14, etwa senkrecht steht zur Längsmittelachse 3 der Büchse 2 und eine der Seitenwandflächen, nämlich die Seitenwandfläche 15, zu dieser Längsmittelachse 3 geneigt angeordnet, d.h. als Kegelfläche ausgebildet ist, wobei die beiden einander gegenüberliegenden Seitenflächen einer Nut in Richtung zur Längsmittelachse 3 der Büchse 2 hin divergieren. Die Neigung der nicht-parallelen Seitenwandfläche 15 zur Längsmittelachse 3 der Büchse 2 liegt zwischen 85 bis 65°, vorzugsweise bei 75°. Auf diese Weise bildet jede Ringnut 13 einen trapezförmigen Querschnitt (siehe Fig. 5).

Durch die nicht-parallelen Seitenwandflächen 14, 15 der Nuten 13 wird auch bei Auftreten von Schrumpfungen beim Eingießen bzw. beim Auftreten von Wärmedehnungen bei Verwendung des Kunststoff-Rohrleitungsteils 1 eine gute Dichtheit erzielt, da Schrumpfungen des Büchsenkopfes 7 bzw. des Kunststoffes des Kunststoff-Rohrleitungsteils 1 infolge des Auftretens einer Keilwirkung zwischen den Seitenwandflächen 14, 15 und dem Kunststoff des Kunststoff-Rohrleitungsteils 1 ein die Dichtheit förderndes Anpressen des Kunststoffes an den Seitenwandflächen 14, 15 erzielt wird.

Wie insbesondere aus den Fig. 1 und 2 zu erkennen ist, erstrecken sich die die Büchsenköpfe 7 umgebenden Ansätze 12 auch geringfügig in den Innenraum 16 des Kunststoff-Rohrleitungsteils 1 und umgeben auch die Ringfläche 9, mit der die Büchsenköpfe 7 in den rohrförmigen, zwischen den Büchsenköpfen 7 liegenden Büchsenteil 8 übergehen. Um mit Sicherheit ein Vordringen der im Kunststoff-Rohrleitungsteil 1 fließenden Flüssigkeit zu den Büchsenköpfen 7 zu vermeiden, ist in geringem Abstand 17 von jeder Ringfläche 9 der Büchsenköpfe 7 noch ein ringförmiger Ansatz 18 an der Büchse 2 vorgesehen, der ebenfalls peripher umlauft und einen wesentlich kleineren Außendurchmesser aufweist als der Büchsenkopf 7. Dieser Ansatz ist ebenfalls komplett vom Kunststoff des Kunststoff-Rohrleitungsteils 1 umgeben, d.h. in diesem eingegossen. Sollte es durch Materialschrumpfungen bzw. wiederholte Wärmedehnungen etc. doch zu einer Spaltbildung zwischen dem rohrförmigen Büchsenteil 8 und den Ansätzen 12 des Kunststoff-Rohrleitungsteils 1 kommen, wird die Flüssigkeit durch den ringförmigen Ansatz 18 mehrfach umgelenkt, bevor sie zu den Ringflächen 9 der Büchsenköpfe 7 vordringen kann, so daß die Büchsenköpfe 7 selbst in diesem Fall nur einer äußerst geringen Druckbelastung ausgesetzt sind und die Dichtheit der Büchsenköpfe 7 im Kunststoff-Rohrleitungsteil 1, d.h. den Ansätzen 12 derselben aufrecht bleibt.

Bei dem in der Zeichnung dargestellten Kunststoff-Rohrleitungsteil 1 handelt es sich um einen Modul für einen Heizkreisverteiler 19, der in Fig. 6 dargestellt ist. Wie aus Fig. 6 zu ersehen ist, ist der Modul 1 zur Aufnahme des Thermoelementes an anderen Modulen 20, die der Verzweigung der Heizflüssigkeit dienen, angeschweißt, u.zw. durch eine Polyfusionsschweißung. Zu diesem Zweck weist der Kunststoff-Rohrleitungsteil 1 einen Ansatz 21 auf, der in eine entsprechende Ausnehmung des benachbarten Moduls 20 einsetzbar ist und mit diesem verschweißt werden kann.

Die Erfindung beschränkt sich nicht auf das in der Zeichnung dargestellte Ausführungsbeispiel, sondern sie kann in verschiedener Hinsicht modifiziert werden. Beispielsweise ist es möglich, anstelle der durchgehenden Büchse 2 nur eine von einer Seite in den Kunststoff-Rohrleitungsteil 1 ragende Büchse vorzusehen. Auch ist die Anzahl der Ringnuten 13 beliebig wählbar. In der Regel hängt die Anzahl der Ringnuten 13 vom im Kunststoff-Rohrleitungsteil 1 herrschenden Innendruck ab. Der erfindungsgemäße Kunststoff-Rohrleitungsteil 1 kann auch für andere Verwendungszwecke angewendet werden, beispielsweise für Kühlsysteme, Trinkwasserversorgungsanlagen etc.

## Patentansprüche

1. Kunststoff-Rohrleitungsteil (1) für die Aufnahme eines Thermofühlers, gekennzeichnet durch die Kombination folgender Merkmale:
• eine in den Kunststoff-Rohrleitungsteil (1) zum Teil eingegossene, in das Innere des Kunststoff-Rohrleitungsteils (1) ragende metallische, den Thermofühler aufnehmende Büchse (2), die den Kunststoff-Rohrleitungsteil (1) kreuzend angeordnet ist,
• wobei die Büchse (2) mindestens einen Büchsenkopf (7) mit einem nach außen offenen Ende zum Einführen des Thermofühlers aufweist, welcher Büchsenkopf (7) vom Kunststoffdes Kunststoff-Rohrleitungsteiles (1) umgeben ist, und
• der Büchsenkopf (7) außenseitig mit mindestens einer peripher umlaufenden Ringnut (13) versehen ist, die vom Kunststoff des Kunststoff-Rohrleitungsteiles (1) ausgefüllt ist, und
• wobei die Ringnut (13) nicht-parallele Seitenwandflächen (14, 15) aufweist, die in Richtung zur Längsmittelachse (3) der Büchse (2) hin divergieren.

2. Kunststoff-Rohrleitungsteil (1) nach Anspruch 1, dadurch gekennzeichnet, daß die Ringnut (13) einen trapezförmigen Querschnitt aufweist.

3. Kunststoff-Rohrleitungsteil (1) nach Anspruch 1 oder 2, dadurch gekennzeichnet, daß eine der beiden Seitenwandflächen (14, 15) senkrecht steht zur Längsmittelachse (3) der Büchse (2).

4. Kunststoff-Rohrleitungsteil (1) nach einem oder mehreren der Ansprüche 1 bis 3, dadurch gekennzeichnet, daß die Innenseite der Rohrleitungswand (6) an der Büchse (7) dichtend anschließt und zwischen der Innenseite der Rohrleitungswand (6) und dem der Aufnahme der Nut (13) dienenden Büchsenkopf(7) ein ringförmiger Ansatz (18) vorgesehen ist, der einen wesentlich kleineren Außendurchmesser aufweist als der Büchsenkopf (7), wobei der Ansatz (18) ebenfalls vom Kunststoff des Kunststoff-Rohrleitungsteiles (1) umgeben ist.

5. Kunststoff-Rohrleitungsteil (1) nach einem der Ansprüche 1 bis 4, dadurch gekennzeichnet, daß die Büchse (2) den Kunststoff-Rohrleitungsteil (1) zur Gänze durchsetzt und an beiden Enden mit je einem Büchsenkopf (7) nach Anspruch 1 ausgestattet ist.
